# EUROPEAN PATENT APPLICATION

(11) **EP 1 370 065 A2**
(43) Date of publication of application: **10.12.2003**
(21) Application number: 03003952.3
(22) Date of filing: 22.02.2003
(51) Int. Cl.: H04N 1/46

(54) **Method and apparatus for reproducing a colour image based on monochrome images derived therefrom**

(30) Priority: 05.04.2002 US 117240
(71) Applicant: CANADIAN BANK NOTE COMPANY, LTD., Ottawa, Ontario K1Z 1A1 (CA)
(72) Inventor: Merry, Trevor, Ottawa, Ontario (CA); Buzuloiu, Ileana, Ottawa, Ontario K2E 6C6 (CA)
(74) Representative: Rottmann, Maximilian R.

(57) **Abstract**

Methods and apparatus are provided, first for converting a colour image to a set of monochrome or, preferably, grayscale image components and then for producing a reconstructed colour image from such set of monochrome or grayscale image components assumed to derive from an original colour image. Preferably, the image components are Red, Green and Blue grayscale image components, such that each is associated with a different colour plane of the original colour image. The original colour image is separated into the image components by means of a colour plane separator component which extracts the independent colour plane images (Red, Green and Blue). Advantageously, the grayscale image components derived from the original image may be stored, printed and otherwise processed on an individual basis while still preserving the collective information needed to reproduce the original image. More specifically, each image component may be separately printed on a document, for example in a covert manner, using ultraviolet (or infrared) ink, in order to provide increased security to a document. To produce a reconstructed colour image from the separately printed grayscale image components each image is scanned and associated with a colour corresponding to the colour plane associated therewith. The colour-associated image components are then processed and forwarded to an output device for combining them in their associated colours to form the reconstructed colour image.

## Description

### Field of the Invention

This invention relates to a method and apparatus for reproducing colour images based on monochrome (e.g. grayscale) images derived therefrom and applications of the invention are especially but not exclusively applicable to the field of security systems for documents such as identity documents.

### Background of the Invention

Identity documents such as passports ideally include a number of security features which assist in protecting the document against unauthorized tampering and counterfeiting. One such known security feature is to print onto the document predetermined indicia using ultraviolet or infrared inkwhich is invisible under normal light to someone inspecting the document for purposes of tampering or counterfeiting, but which becomes visible when exposed to ultraviolet or infrared light, respectively, such as by a customs inspector who deliberately scrutinizes the document to confirm the presence of such covert indicia using an appropriate ultraviolet or infrared light.

An example of one such covert image usage is provided by U.S. Patent No. 6,155,168 issued 5 December, 2000 to Sakamoto which discloses a document on which a complete colour portrait is printed on two areas of a document such that one is visible but the other is covert, the visible colour portrait printed using visible Cyan, Magenta and Yellow inks and the covert colour portrait printed using ultraviolet (or infrared) Red, Green and Blue inks which are only visible, and fluoresce in those colours, when exposed to ultraviolet (or infrared) light.

Disadvantageously, however, such relatively complicated covert colour images present difficulties when attempting to design automated means for reading the coloured images using ultraviolet sources (i.e. ultraviolet readers). While attempts are being made by persons in the industry to develop an ultraviolet reader for reading covert monochrome images, the complexity and cost of such designs would necessarily increase, and be less likely to succeed, if such readers were to be capable of reading a covert colour image such as that described in U.S. Patent No. 6,155,168.

There is a need, therefore, for improved means for reproducing a colour image on a document, in a covert manner, such that it is not visible under normal light but for which automated detection means may be more readily and cost-effectively designed and implemented.

Further, there is a need for producing a colour image of a document holder based on covert subject matter read from a document presented by such document holder, for purposes of live comparison (e.g. at a customs/border station) with the document holder.

### Summary of the Invention

In accordance with the invention there is provided a method for converting a colour image to a set of monochrome image components for separate processing (e.g. all in electronic form). The colour image is separated into a set of monochrome image components whereby each image component corresponds to a different colour plane of the colour image, the set of image components (e.g. three image components one for each of the Red, Green and Blue colour planes) being configured for forming a reconstructed colour image having an appearance of the colour image when the image components are combined in the colour planes which correspond to them. Each monochrome image component is associated with the colour plane which corresponds to it and each is output for separate processing (e.g. printing onto a document such as an identity document). Advantageously, each monochrome image component may be a grayscale image component of the colour image (i.e. to provide one grayscale image corresponding to the Red colour plane, a second grayscale image corresponding to the Green colour plane and a third grayscale image corresponding to the Blue colour plane).

Preferably, the grayscale image components are both tone encrypted according to an encryption function, which function may apply personal data for a holder of the document, and filtered. The image components may also be encoded to produce PDF (portable data file) encoded image components therefrom.

For security purposes, particularly where the image components are printed onto an identity document, the image components are printed using a UV or IR fluorescent ink. Where UV ink is used the filtering of the image components includes image inversion for each the image component.

Preferably, registration markers are applied to each image component for printing onto the document with the image components, the registration markers being configured for identifying bounds delimiting the printed image components. A plurality of calibration markers are also preferably applied to each grayscale image component for printing onto the document with the image components, the calibration markers being configured for identifying predetermined gray level intensities for colour calibration of the reconstructed colour image.

Also in accordance with the invention there is provided a method for producing a reconstructed colour image from a set of monochrome image components (i.e. three image components corresponding to the Red, Green and Blue colour planes) assumed to derive from an original colour image whereby each the image component is associated with a different colour plane of the original colour image. The set of monochrome image components are provided for processing, e.g. to processing means, and each monochrome image component is associated with a colour corresponding to the colour plane associated therewith. Each monochrome image component is forwarded to an output device (e.g. a computer monitor) in association with the colour associated therewith for combining the image components in their associated colours to form the reconstructed colour image.

Advantageously, the image components may be grayscale image components printed on a document, whereby providing the set of image components comprises scanning the printed image components to produce scanned images comprising the image components in electronic form.

Where the image components comprise a plurality of registration markers configured for identifying bounds delimiting the printed image components, these markers are identified and processed to delimit the image components from the scanned images. Similarly, where the image components comprise a plurality of calibration markers configured for identifying predetermined gray level intensities for colour calibration of the reconstructed colour image, these markers are identified and processed to adjust the colour of the image components. Where the image components are PDF encoded they must be decoded and, similarly, where they are tone encrypted and/or filtered, they must be tone decrypted and/or filtered.

Preferably, compensation is applied to compensate for 2-dimensional distortion in the image components. Suppression of overlaying text in the scanned images is also preferably applied.

Also in accordance with the invention there is provided apparatus for converting a colour image to a set of monochrome image components for separate processing. A colour plane separator component separates the colour image into a set of monochrome image components whereby each image component corresponds to a different colour plane of the colour image. The set of image components is configured for forming a reconstructed colour image having an appearance of the colour image when the image components are combined in the colour planes corresponding thereto. Processing means associates each the monochrome image component with the colour plane corresponding thereto. Output means outputs each monochrome image component for separate processing (i.e. separate printing on a document, such as an identity document). The colour plane separator component is configured for extracting the independent colour plane images from the colour image and the set of image components may comprise three grayscale image components corresponding to Red, Green and Blue colour planes of the colour image.

The apparatus may comprise a tone encryption component configured for tone encrypting the image components according to an encryption function (e.g. using personal data of a holder of the document, as read into the apparatus by a data reader). A filtering component configured for filtering the image components may be provided. The apparatus may also include a PDF encoder configured for encoding the image components to produce PDF encoded image components therefrom.

The image components may be printed using a UV or IR fluorescent ink, and where UV ink is used the filtering component is configured to perform image inversion of each image component.

Preferably, the apparatus comprising processing means for applying a plurality of registration markers to each image component for printing onto the document with the image components, the registration markers being configured for identifying bounds delimiting the printed image components. The apparatus may also include processing means for applying a plurality of calibration markers to each image component for printing onto the document with the image components, the calibration markers being configured for identifying predetermined gray level intensities for colour calibration of the reconstructed colour image.

Further in accordance with the invention there is provided an apparatus for producing a reconstructed colour image from a set of monochrome image components assumed to derive from an original colour image whereby each image component is associated with a different colour plane of the original colour image. Input means provides the set of monochrome image components. Processing means associates each monochrome image component with a colour corresponding to the colour plane associated therewith. Output means forwards each monochrome image component in association with the colour associated therewith to an output device (e.g. a computer monitor) for combining the image components in their associated colours to form the reconstructed colour image. The image components are preferably grayscale images printed on a document, whereby the input means comprises a scanner component for scanning the printed image components to produce scanned images comprising the image components in electronic form.

The apparatus may comprise processing means configured for identifying registration markers and processing such markers to delimit the image components from the scanned images. Processing means may also be provided for for identifying colour calibration markers and processing such markers to adjust the colour of the image components.

The apparatus may further comprise a decoder configured for decoding the image components, a decryption component configured for decrypting the image components and/or a filter component configured for filtering the image components.

### Description of the Drawings

The present invention is described in detail below with reference to the following drawings in which like reference numerals refer throughout to like elements.

Figures 1(a), (b), (c) and (d) are pictorial representations of image processing steps in accordance with the invention for reproducing a colour image based on a set of monochrome (grayscale) images derived from an original colour image;

Figure 2 is a schematic block diagram showing the generation of printed grayscale images derived from an original colour image in accordance with the invention;

Figures 3 (a), (b) and (c) are pictorial representations of image processing steps for tone encrypting a grayscale image component of an original colour image;

Figure 4 is a block diagram illustrating the image processing components in accordance with the invention for processing and encoding grayscale images derived from an original colour image;

Figure 5 is a schematic block diagram showing the reconstruction of an original colour image from printed grayscale images derived therefrom;

Figures 6(a) and 6(b) are block diagrams illustrating image processing components for performing a marker-based image location process (viz. Figure 6(a)) and for performing a calibration-marker based colour calibration process (viz. Figure 6(b)); and,

Figure 7 is a block diagram illustrating the image processing components in accordance with the invention for processing and decoding grayscale images derived from an original colour image to reconstruct and display that original colour image.

### Description of an Illustrative Embodiment

In accordance with the invention an original colour image, such as but not limited to a colour portrait, is separated into three independent monochrome image components by extracting the independent colour plane images making up the original colour image. The independent monochrome image components together define the original colour image and comprise all the information needed to reproduce the original colour image.

For the embodiment described herein each monochrome image is a grayscale image which, advantageously, enables the various preferred processing steps described herein (including tone encrypting and filtering). Grayscale images provide detailed information through numerous pre-designated gray level tones (alternatively referred to herein as gray level intensities) which are assigned on a pixel-by-pixel basis, as is well known and understood by persons skilled in the art of image processing. For example, one pixel of a grayscale image might be assigned any one gray level intensity of a possible 256 (represented by one byte of electronic data) different gray level intensities. By contrast, if instead only a simple bi-level tone monochrome image is used each pixel would comprise much more limited information, namely, information identifying only the presence or absence of a single colour/tone (i.e. in electronic terms, either 1 or 0).

It is to be understood by the reader that throughout this specification and the claims herein the term "monochrome image" includes both of the foregoing types of single colour images viz. a bi-level tone image and a grayscale image. More specifically, the term "grayscale image" is defined herein to be one type of monochrome image as described above.

According to the invention the original colour image is separated into independent colour plane images by means of a colour plane separator component which extracts from the original colour image, by decomposing, its R,G,B components according to conventional bitmap image processing. The separated component images are electronically recorded for later use. Optionally, the three component images, which are grayscale images for the embodiment herein, may be sent directly to a printer.

A further option, such as for a large scale printing application, is to use the component images to make printing plates for lithographically printing the component images in Yellow, Magenta and Cyan inks, respectively, in such a manner that the three images are printed superposed on each other in register to give the illusion of a full range of colours. To make the illusion more complete a fourth ink, Black is optionally printed to extend the available tone range of the printed reproduced colour image.

To reproduce the colour image on a computer monitor, rather than print the image, it is sufficient to simply apply the Red, Green and Blue image components to the respective colour controllers of the monitor.

Advantageously, the monochrome (grayscale) image components derived from the original image may be stored, printed and otherwise processed on an individual basis while still preserving the collective information needed to reproduce the original image. More specifically, each image component may be separately printed on a document. For example, the image components may be printed in a covert manner, using ultraviolet (or infrared) ink, in order to provide increased security to a document. Further, since each of the three images is independent and uniquely associated with a predetermined colour plane they may be read and processed as simple grayscale images and then each grayscale image is simply associated with the particular colour of the colour plane to which it corresponds (i.e. Red, Green or Blue).

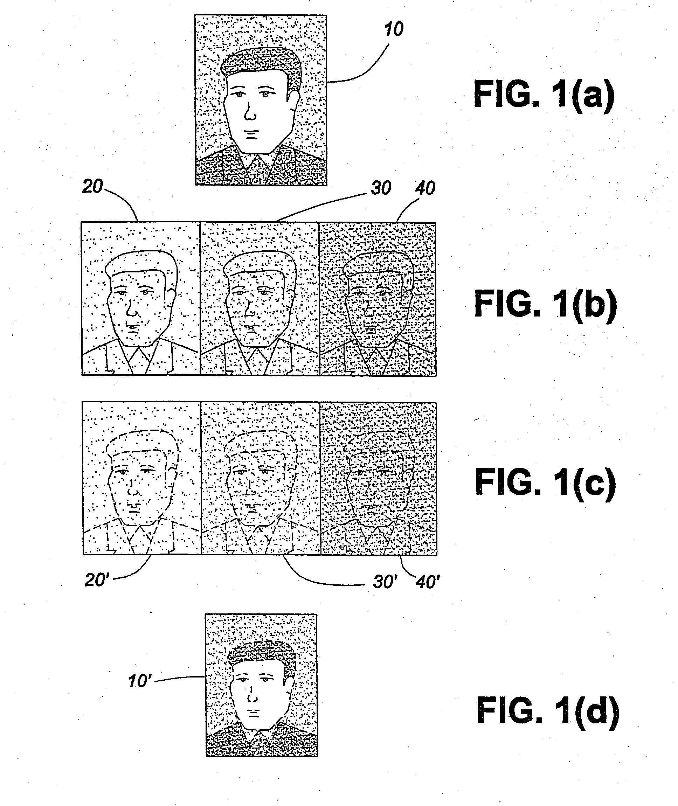

Referring to Figure 1(a) an original colour image 10 is processed as described above to produce independent Red, Green and Blue image components. These image components 20, 30, 40 are separately printed on a document (e.g. a passport page) in monochrome. Specifically, each image component 20, 30, 40 is printed using an ultraviolet (UV) ink by means of ink jet printing (which are shown in visible form in Figure 1(b) for purposes of illustration but which are not visible under normal light on the actual document). As a result, under normal light none of the printed image components can be seen but under UV illumination the three images fluoresce a visible monochrome light (e.g. the colour blue for a blue-fluorescing UV ink).

Advantageously, the UV ink printed image components may be read by a monochrome UV reader such as the UV reader which has been developed by the assignee of this application and no facility for capturing or displaying a colour image is required to do so. Each of the image components 20,30,40 is read by a UV reader and the resulting electronic data records for the image component are fed to a computer system linked to the reader. The computer system inverts and stores in memory the electronic data records defining image components 20', 30', 40' in such a manner that the particular colour (i.e. Red, Green or Blue) to which,each image component corresponds is associated with that image component and, thereby, the collective colour information is maintained.

The monochrome images 20',30',40' corresponding to separate Red, Green and Blue colour plane images, respectively, are then output and applied to the Red, Green and Blue colour controllers of a computer monitor and the individual colour images are combined so as to be coincident. One optional means of combining the three images, so that they are registered to align accurately, is to use a manual cut and paste application such as that provided by the Corel Draw™ computer graphics software (available from Corel Corporation). However, for the embodiment described herein, a preferred, automated means to do so is provided whereby unobtrusive registration markers are applied to each component image during the printing stage to allow for later precise image alignment and combining, and correction of distortions such as paper shrinking with age (the manner of use of these registration markers being described in greater detail below).

The resulting reconstructed image which then appears on the monitor is a full colour reproduction 10' of the original colour image 10. As is evident, this colour reproduction of the original image 10 is produced from printed monochrome images which, advantageously, are captured (read) using only a monochrome reader.

If the image components 20',30',40' used to create the colour reproduction image 10' do not correspond to the original image components 20,30,40 derived from the original image 10, the foregoing reconstruction process used to reproduce the original image 10 will visibly fail because erroneous images will be displayed. Such failure will, therefore, serve as an alarm to an inspecting authority that the document under review is not authentic. For example, if one of the monochrome image components 20',30',40' is incorrect the reproduced image 10' will show obvious incorrect colouring. Thus, an application of this image reconstruction used by, for example, a customs/border officer could include a live comparison of the reconstructed image with that of the person (document holder) who presents the document from which the image components are read.

The foregoing method of reproducing colour images may be used in like manner to capture and display alpha-numeric data (e.g. personal data relating to a passport holder), an official seal, crest or other artistic or computer generated rendering onto a document or onto a laminate covering a document.

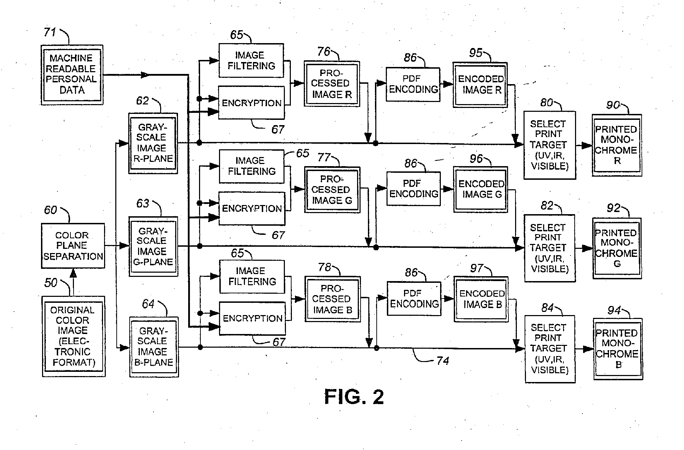

The block diagram of Figure 2 shows processing components for generating printed grayscale images derived from an original colour image in accordance with the invention. An original electronic colour image 50 is separated by a colour plane separator 60 into RGB colour planes to produce three grayscale images 62, 63 and 64 representing the R, G and B components, respectively, of the original colour image 50. As shown by Figure 2, for the illustrated embodiment each of these image components is further processed as detailed in the following. However, for another embodiment it might instead be elected to forward these components directly (per the direct flow paths 70, 72 and 74 shown in Figure 2) to a printing device for printing using a selected printing target (i.e. UV ink, IR ink or visible ink) 80, 82, 84. In the result, three independent printed grayscale images 90, 92 and 94, representing the RGB image planes of the original image, are printed.

Optional image processing components shown by Figure 2 are an image filtering component 65 and a tone encryption component 67 for further processing of each grayscale image component. These components process the colour information provided by the image components but preserve the visual identity of the image.

Filtering of a grayscale image component by the image filtering component 65 produces a change in colour for the reconstructed image, over that of original image, which is uniform and extends across the entire image area. This filtering is achieved using conventional image processing algorithms e.g. intensity or gamma adjustment or combinations of these.

Optionally, the image filtering components 65 are configured to perform image inversion which is of particular use when the image components are printed using UV ink. By printing the image components in inverted manner they will appear correctly (i.e. as the original image components) when they are illuminated with UV light. Whereas, if they were printed as per the original image components they would appear as the negatives of those original image components when illuminated by a UV light source (due to the fact that it is the light emitted by a UV printed ink which is seen).

Since the colour information for the original image is defined by the gray tone of each image component, small tonal alterations applied to the grayscale image components can produce significant colour changes in the reconstructed colour image. This phenomenon is used to advantage in the illustrated embodiment to increase the security of the process for reconstructing the original colour image, whereby a tone encryption algorithm is applied to each grayscale image component by a tone encryption component 67. Since the tone encrypted image component differs from the non-encrypted image component it would produce a noticeably different reconstructed colour image if it were to be used to try to reconstruct the original colour image rather than the correct decrypted image component.

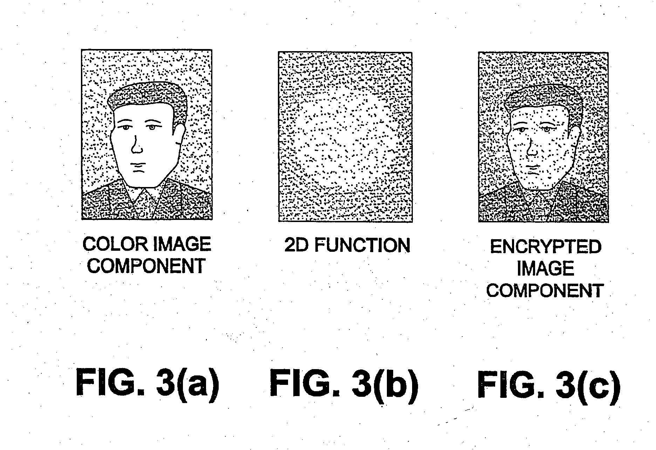

As illustrated by Figures 3(a)-(c) the tone encryption component 67 applies a predetermined spatial distribution pattern (Figure 3(b)) to the image component (Figure 3(a)) to generate a tone encrypted image component (Figure 3(c)). The distribution pattern is used to describe how the tonal variations are applied across the entire image area. Accordingly, the colour image represented by the tone encrypted image components will be very different from the original colour image. The spatial distribution pattern is generated by a 2-dimensional mathematical function which, preferably (as shown, to increase the security provided), is personalized for the particular document being processed by applying personal data 71 to the mathematical function.

In the embodiment illustrated by Figure 2, the processed image components 76, 77 and 78 are then incorporated into a 2-dimensional bar code 95, 96 and 97 by a PDF encoder 86 which uses a PDF (portable data file) encoding algorithm. Alternatively, for another embodiment, the processed image components 76, 77 and 78 could themselves be printed without first converting them to bar codes.

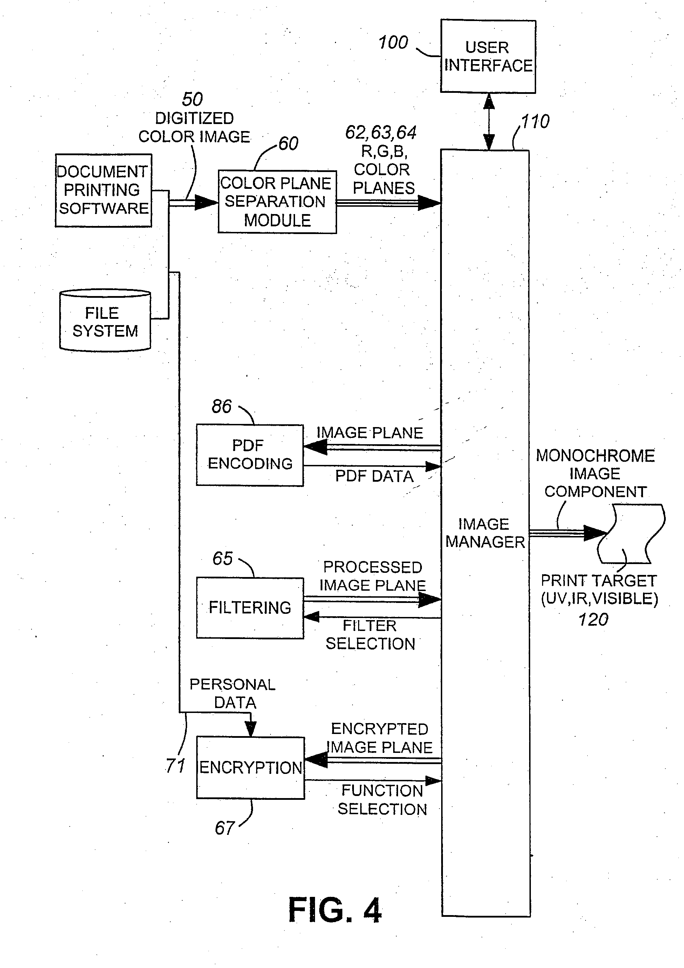

Figure 4 shows the exchange of data between the image processing components of Figure 2. An image manager software component 110 is run on processing means in the form of a computer processor (not shown) and controls the processing flow and the exchange of data. The image manager 110 also interfaces with a user through a user interface 100 and directs the processed grayscale image components for printing by selected printing target 120.

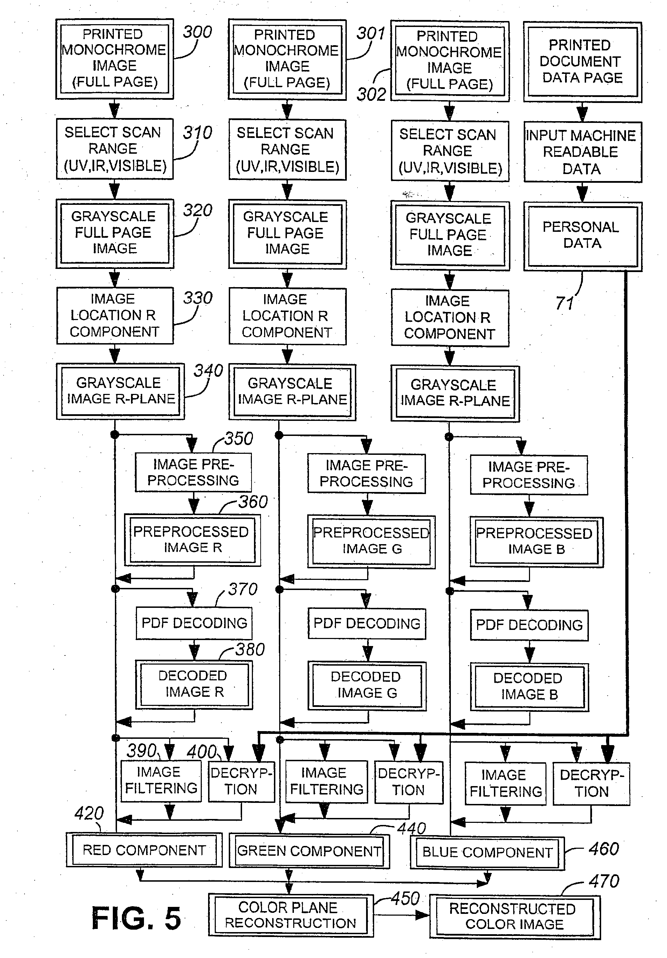

To reconstruct the original colour image from printed image components produced according to the foregoing, a reverse of the image processing and encoding is performed by the components shown in Figures 5-7. Referring to Figure 5, the printed grayscale images 300 are captured by a scanner 310 using an illumination range (UV, IR or visible) which is appropriate for the printed images. By the scanning process the grayscale image is converted into a grayscale image. However, because the area captured by the scanning process is larger than the individual image component it is necessary to provide means for locating the image component within the electronic captured image. A software image locator component 330 determines the exact coordinates (e.g. rectangular) which delimit the grayscale image component and outputs the grayscale image component 340 (i.e. being the image component for one of the Red, Green and Blue planes).

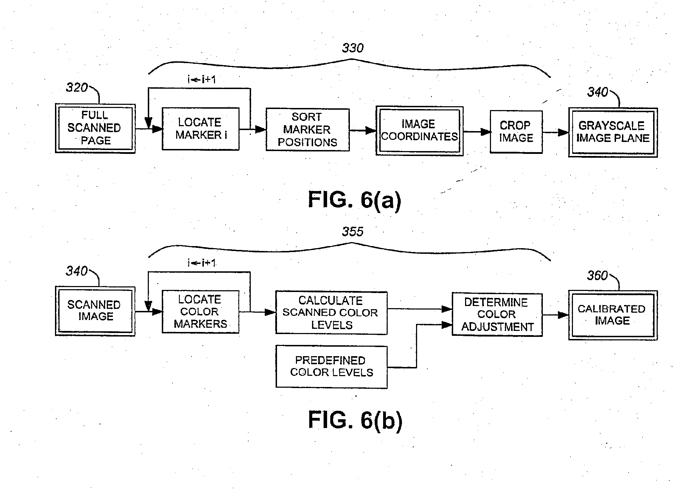

Figure 6(a) illustrates the functions performed by the image locator component 330. At the time each image component 300 is printed a set of registration markers are placed at predetermined locations with respect to the image. For the illustrated embodiment, the markers are positioned according to a simple geometrical shape which allows for simplification of the algorithm used by the locator component 330 to accurately locate them. The full (i.e. oversized) scanned image 320 is analysed by the locator component 330. Each individual marker is located by the component using a simple pattern matching algorithm and once all markers have been located their (x,y) coordinates are sorted. From the sorted marker coordinates the locator component determines the image coordinates, these being in the form of a bounding rectangle for the image component. Lastly, the locator component crops the full scanned image 320 to match the calculated bounding rectangle coordinates and the cropped image is the grayscale image component 340. It is to be understood that due to 2-dimensional distortion produced within the scanning process, the referenced rectangle may actually be a trapezoid, rhomboid or other geometrical shape. However, the term bounding "rectangle" is used herein because the grayscale image component is rectangular. An image preprocessing component 350 is provided to compensate for such distortion.

Because the markers are printed at the same time as the image component, they are able to provide precise information for the location of the image component. The above-referenced 2-dimensional distortions that are expected to result from the scanning process will affect the markers to approximately the same extent as the image itself and this results in a greater accuracy for the compensation of these distortions.

The image preprocessing component 350, shown in Figure 5, performs two functions, namely, common image processing and colour calibration. The common image processing refers to operations of noise removal, the aforementioned compensation of 2-dimensional image distortion and suppression of overlaying text. These operations increase the image quality in order that better results may be obtained by the subsequent image processing components (i.e. the PDF decoding component 370, the image filtering component 390 and the decryption component 400).

The aforementioned 2-dimensional image distortion is corrected by the well-known digital image processing algorithms which are available and commonly used in the field of digital image processing. This is needed because in order to successfully reconstruct the original image from the three image components they must be precisely combined (this is because colour reconstruction is determined on a pixel-by-pixel basis and the accuracy of the colours will depend upon whether corresponding pixels are accurately aligned).

It is likely, given the restricted space available on most travel documents that the separated grayscale images 300, 301 and 302 will be overlaid to a minor extent with visible black printed data such as names, dates, physical descriptors etc. To suppress these potentially distracting elements within the images, a threshold algorithm is applied to the scanned full page image to replace the black printing with a grayscale value similar to the density of the adjacent area in each of the colour planes.

Figure 6(b) illustrates the colour calibration function performed by a colour calibration component 355 of the preprocessing component 350. The colour calibration is performed as a preliminary operation to restore the original gray level intensities of the printed images. The colour calibration is performed on the basis of calibration markers which are printed at the same time the image is printed, using predetermined gray level intensities. As described above with reference to the registration markers used by the image locator component 330, a predetermined number of calibration markers are identified from the scanned image 340. Determinations are made of the average gray level intensity for the identified calibration markers. From the differences between these gray level intensities and the predetermined calibration values, a gray level intensity adjustment is calculated and the entire image is then adjusted (this corresponding to a colour level adjustment) so that the scanned gray level intensity of each marker matches the predetermined gray level intensity of that marker. By using several gray level intensities for the different calibration markers a more accurate colour calibration is achieved. The calibration markers may be any suitable shape but must cover a minimal area (which is dependent upon the resolution of the scanning device used for scanning the printed image) in order for useful colour information to be provided by them.

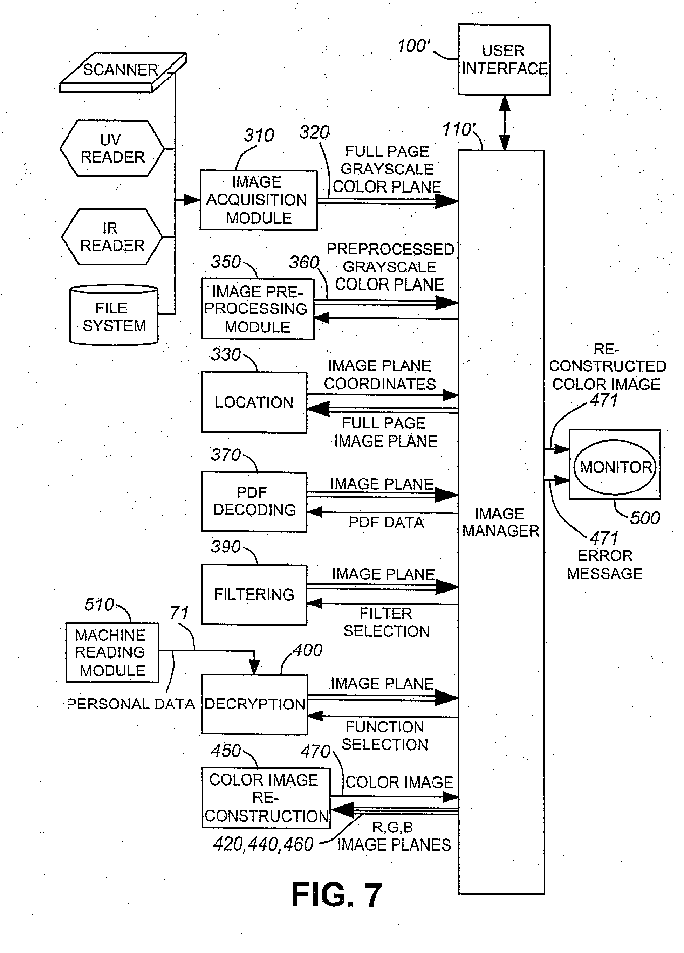

As shown by Figure 5, in applications where the image filtering, tone encrypting and PDF encoding operations of Figure 2 and 4 were performed to produce the printed image components, it is necessary that the image reconstruction system perform the reverse operations of these. First, for each bar code image (representing one of the image components viz. red, green or blue), the bar code image is decoded and the image component is extracted therefrom. As shown, for the resulting image component 380 representing the red plane of the original image, the image is then filtered by a filtering component 390 to remove any pre-printing filtering that was applied to modify the original image and decrypted by a tone decryption component 400 to remove any pre-printing tone encryption that was applied to the original image. In the example provided by Figure 2 the tone encryption component used personal data 71 to encrypt each image component and, thus, the system shown by Figure 5 also includes the application of that personal data 71 by the tone decryption components to correctly decrypt the decoded image input thereto. As shown in Figure 7 the personal data may be provided by an automated reading component 510 that interfaces with system. Finally, the processed image components 420, 440 and 460 are recombined by a colour plane reconstruction component 450 to produce the reconstructed colour image 470 which matches the original colour image 50.

Figure 7 shows the exchange of data between the image processing components of Figure 5. An image manager software component 110' is run on processing means in the form of a computer processor (not shown) and controls the processing flow and the exchange of data. The processing is normally performed on an iterative basis for purposes of accuracy and it is to be understood by the reader that the processing components shown in Figure 7 are operated in such an iterative order and not necessarily in the specific order depicted in Figure 7. The image manager 110' also interfaces with a user through a user interface 100' and forwards the reconstructed colour image 470 to an output device i.e. a computer monitor 500 for display. Optionally, an error message 471 may also be forwarded for display if the image manager determines that the reconstructed image is erroneous and cannot correspond to the original image.

It will be understood by the reader that, advantageously, all of the information described herein which may be needed to reconstruct an original colour image from a set of printed grayscale images associated with independent colour planes can, optionally, be printed together with those grayscale images so that the document on which they are printed is all that is needed to produce such reconstructed image. Specifically, any applied encryption function, as well as an identification of the colour plane associated with each image, can be printed in covert manner onto a document with the image components.

The software may be configured to optionally display images repetitively across a monitor 500 so as to present an animated display.

A further optional security feature, provided in accordance with the invention, is to tone encrypt the image components so that incorrect colour and tone results in the reconstructed image as compared to the original image, whereby a decryption key is required by the software to remove the intentionally applied artifacts of incorrect colour and tone prior to printing. The tone encryption may, optionally, be embodied in a 2-dimensional bar code specifically related to the original image.

The individual electronic and software processing functions utilised in the foregoing described embodiment are well understood by those skilled in the art. It is to be understood by the reader that a variety of other implementations may be devised by skilled persons for substitution. Persons skilled in the field of image and computer processing will be readily able to apply the present invention to implement various applications of the same.

Consequently, it is to be understood that the particular embodiment described herein by way of illustration is not intended to limit the scope of the invention claimed by the inventors which is defined by the appended claims.

## Claims

1. A method for converting a colour image to a set of monochrome image components for separate processing, said method comprising the steps:
(a) separating said colour image into said set of monochrome image components whereby each said image component corresponds to a different colour plane of said colour image, said set of image components configured for forming a reconstructed colour image having an appearance of said colour image when said image components are combined in said colour planes corresponding thereto;
(b) associating each said monochrome image component with said colour plane corresponding thereto; and,
(c) outputting each said monochrome image component for said separate processing.

2. A method according to claim 1 whereby each said monochrome image component is a grayscale image component.

3. A method according to claim 2 whereby said separating comprises extracting independent colour plane images from said colour image and said set of image components comprises three grayscale image components corresponding to Red, Green and Blue colour planes of said colour image.

4. A method according to claim 3 whereby said images are in electronic form.

5. A method according to claim 4 whereby said separate processing comprises separately printing each said image component onto a document.

6. A method according to claim 5 and further comprising tone encrypting said image components according to an encryption function.

7. A method according to claim 6 and further comprising filtering said image components.

8. A method according to claim 7 whereby said document is an identity document and said encryption function applies personal data associated with a holder of said identity document.

9. A method according to claim 8 and further comprising encoding said image components to produce PDF encoded image components therefrom.

10. A method according to claim 5 whereby said image components are printed using a UV or IR fluorescent ink.

11. A method according to claim 7 whereby said image components are printed using a UV or IR fluorescent ink.

12. A method according to claim 11 whereby said filtering performs image inversion of each said image component and said ink is a UV-fluorescent ink.

13. A method according to claim 5 and further comprising applying a plurality of registration markers to each said image component for printing onto said document with said image components, said registration markers being configured for identifying bounds delimiting said printed image components.

14. A method according to claim 13 and further comprising applying a plurality of calibration markers to each said image component for printing onto said document with said image components, said calibration markers being configured for identifying predetermined gray level intensities for colour calibration of said reconstructed colour image.

15. A method for producing a reconstructed colour image from a set of monochrome image components assumed to derive from an original colour image whereby each said monochrome image component is associated with a different colour plane of said original colour image, said method comprising the steps:
(a) providing said set of monochrome image components;
(b) associating each said monochrome image component with a colour corresponding to said colour plane associated therewith; and,
(c) forwarding to an output device each said monochrome image component in association with said colour associated therewith for combining said image components in said associated colours to form said reconstructed colour image.

16. A method according to claim 15 whereby said set of image components comprises three image components assumed to correspond to Red, Green and Blue colour planes of said colour image.

17. A method according to claim 16 whereby said images are in electronic form.

18. A method according to claim 17 whereby said image components are grayscale image components printed on a document and said providing comprises scanning said printed image components to produce scanned images comprising said image components in electronic form.

19. A method according to claim 18 whereby said image components comprise a plurality of registration markers configured for identifying bounds delimiting said printed image components, said method further comprising identifying said markers and processing said markers to delimit said image components from said scanned images.

20. A method according to claim 19 whereby said image components comprise a plurality of calibration markers configured for identifying predetermined gray level intensities for colour calibration of said reconstructed colour image, said method further comprising identifying said markers and processing said markers to adjust the colour of said image components.

21. A method according to claim 20 whereby said image components are PDF encoded in PDF format, said method further comprising decoding said image components.

22. A method according to claim 21 whereby said image components are tone encrypted according to an encryption function, said method further comprising tone decrypting said image components.

23. A method according to claim 22 and further comprising filtering said image components.

24. A method according to claim 23 whereby said document is an identity document and said encryption function includes application of personal data associated with a holder of said identity document, said decrypting comprising application of said personal data.

25. A method according to claim 18 and further comprising compensating for 2-dimensional distortion in said image components.

26. A method according to claim 25 and further comprising suppressing overlaying text in said scanned images.

27. A method according to claim 18 whereby said output device is a computer monitor.

28. Apparatus for converting a colour image to a set of monochrome image components for separate processing, said apparatus comprising:
(a) a colour plane separator component configured for separating said colour image into said set of monochrome image components whereby each said image component corresponds to a different colour plane of said colour image, said set of image components configured for forming a reconstructed colour image having an appearance of said colour image when said image components are combined in said colour planes corresponding thereto;
(b) processing means configured for associating each said monochrome image component with said colour plane corresponding thereto; and,
(c) output means configured for outputting each said monochrome image component for said separate processing.

29. Apparatus according to claim 28 wherein each said monochrome image component is a grayscale image component.

30. Apparatus according to claim 29 wherein said colour plane separator component is configured for extracting independent colour plane images from said colour image and said set of image components comprises three grayscale image components corresponding to Red, Green and Blue colour planes of said colour image.

31. Apparatus according to claim 30 whereby said images are in electronic form.

32. Apparatus according to claim 31 wherein said separate processing comprises separately printing each said image component onto a document.

33. Apparatus according to claim 32 and further comprising a tone encryption component configured for tone encrypting said image components according to an encryption function.

34. Apparatus according to claim 33 and further comprising a filtering component configured for filtering said image components.

35. Apparatus according to claim 33 whereby said document is an identity document and said encryption function applies personal data associated with a holder of said identity document, said apparatus further comprising a data reader.

36. Apparatus according to claim 34 and further comprising a PDF encoder configured for encoding said image components to produce PDF encoded image components therefrom.

37. Apparatus according to claim 31 whereby said image components are printed using a UV or IR fluorescent ink.

38. Apparatus according to claim 36 whereby said image components are printed using a UV or IR fluorescent ink.

39. Apparatus according to claim 38 whereby said filtering component is configured to perform image inversion of each said image component and said ink is a UV-fluorescent ink.

40. Apparatus according to claim 31 and further comprising processing means for applying a plurality of registration markers to each said image component for printing onto said document with said image components, said registration markers being configured for identifying bounds delimiting said printed image components.

41. Apparatus according to claim 31 and further comprising processing means for applying a plurality of calibration markers to each said image component for printing onto said document with said image components, said calibration markers being configured for identifying predetermined gray level intensities for colour calibration of said reconstructed colour image.

42. Apparatus for producing a reconstructed colour image from a set of monochrome image components assumed to derive from an original colour image whereby each said image component is associated with a different colour plane of said original colour image, said apparatus comprising:
(a) input means configured for providing said set of monochrome image components;
(b) processing means configured for associating each said monochrome image component with a colour corresponding to said colour plane associated therewith; and,
(c) output means configured for forwarding each said monochrome image component in association with said colour associated therewith to an output device for combining said image components in said associated colours to form said reconstructed colour image.

43. Apparatus according to claim 42 wherein said set of image components comprises three image components assumed to correspond to Red, Green and Blue colour planes of said colour image.

44. Apparatus according to claim 43 wherein said images are in electronic form.

45. Apparatus according to claim 44 wherein said image components are grayscale image components printed on a document and said input means comprises a scanner component configured for scanning said printed image components to produce scanned images comprising said image components in electronic form.

46. Apparatus according to claim 45 wherein said image components comprise a plurality of registration markers configured for identifying bounds delimiting said printed image components, said apparatus further comprising processing means configured for identifying said markers and processing said markers to delimit said image components from said scanned images.

47. Apparatus according to claim 46 wherein said image components comprise a plurality of calibration markers configured for identifying predetermined gray level intensities for colour calibration of said reconstructed colour image, said apparatus further comprising processing means configured for identifying said markers and processing said markers to adjust the colour of said image components.

48. Apparatus according to claim 47 wherein said image components are encoded in PDF format, said apparatus further comprising a decoder configured for decoding said image components.

49. Apparatus according to claim 48 wherein said image components are tone encrypted according to an encryption function, said apparatus further comprising a tone decryption component configured for tone decrypting said image components.

50. Apparatus according to claim 49 and further comprising a filter component configured for filtering said image components.

51. Apparatus according to claim 50 whereby said document is an identity document and said encryption function includes application of personal data associated with a holder of said identity document, said tone decryption component configured for applying said personal data for said decrypting.

52. Apparatus according to claim 46 and further comprising processing means configured for compensating for 2- dimensional distortion in said image components.

53. Apparatus according to claim 52 and further comprising processing means configured for suppressing overlaying text in said scanned images.

54. Apparatus according to claim 53 wherein said output device is a computer monitor.
